Europäisches Patentamt

**European Patent Office**

Office européen des brevets

(11) Publication number: **0 272 224**
**A1**

# EUROPEAN PATENT APPLICATION

(21) Application number: **87830376.7**

(22) Date of filing: **23.10.87**

(51) Int. Cl.⁴: **F16B 47/00** , A47F 7/19

The title of the invention has been amended (Guidelines for Examination in the EPO, A-III, 7.3).

(30) Priority: **24.10.86 IT 5981886 U**

(43) Date of publication of application:
**22.06.88 Bulletin 88/25**

(84) Designated Contracting States:
**AT BE CH DE ES FR GB GR IT LI LU NL SE**

(71) Applicant: **EASY ITALY S.d.f. di PERENTIN Alessandro & C.**
**Borgo San Nazario 74**
**I-34017 Prosecco TS(IT)**

(72) Inventor: **Perentin, Alessandro**
**Borgo San Nazario 74**
**I-34017 Prosecco TS(IT)**

(74) Representative: **Zorzut, Ermenegildo**
**Studio Tecnico S.A.I. per. ind. ZORZUT**
**ERMENEGILDO Via Imbriani 2**
**I-34122 Trieste(IT)**

(54) **Suction cup provided with a flexible tubular hook for propping some clothes supporting points on transparent or non-transparent panels, particularly suited to fit shop windows, show cases, etc.**

(57) The invention is a suction-cup with a clutch flexible pipe, having on the suction-cup itself two parallel and not parallel guides (11), inside which are inserted some flexible pipes (13) (of sufficient solidity). This kind of suction-cup can be easily applied in the most rational, lasting and safe ways on panels (10) surfaces (of any material, transparent and not transparent).

The flexible pipes (13) can be easily manually bended: on them clothes and other not specified articles (to be shown in a shop-window, show and so on, or to be used in hause furnishing) are hanged and/or treaded.

TAB.3

FIG.4

## "Suction-cup with a clutch flexible pipe, fitted to prop up some points of support for clothes on transparent or not transparent panels, particularly suitable to prepare shop-windows, shows, etc.".

This invention is a suction-cup with a clutch flexible pipe, fitted to prop up some points of support for clothes on transparent or not transparent panels, particularly suitable to prepare shop-windows, shows and so on.

It's useful remember and point out the importance and the validity of the place, in which this invention has a rational and functional use: this to underline the originality and the practical use of the invention in shop-windows, shows, house furnishing and so on. In a shop of every marketable field, windows are its visiting card; in accordance with their preparation, the beholder and the potential buyer of the shown articles perceives, interprets and considers also the seriousness and the activity carried on inside. The shop-window is, consequently a projection towards the outside of what it's possible to find in the shop, starting with the kind, the quality and the price of the dealt products; but the shop-window gives off also more unconscious and impalpable messages, through which the beholder considers the seriousness and the tone of the service offered by the shop.

Particularly shop-window dressing has chiefly to inform, allure, excite the curiousity, fascinate and persuade the passers-by, more and more hurried, absent-minded, · shrewd, disenchanted and also confused in front of a huge offer of products, which requires, of course, a difficult choice.

Consequently the shop-window isn't any more a simple show of products, but becomes a scenography in which fantasy, artistic talent, tecnical and psychological knowledge, rather high costs are employed.

The preparation of shop-windows, shows and so on, is particularly considerable and important in the clothing field (fabrics, clothes, shoes, outfits, etc.), in an even occasional beholder live together a practical aspect formed by the need of clothing and a more ficticious one that directly excites his vanity and his desire to dress himself up, to transform himself, to play more or less coded or completely new social roles.

In those fields in which the visual impact of the product, a well-done shop-window or an inside show, than a real and lasting functionality and validity, have a not slight importance in deciding the success of the product presentation and of its potential sale.

It isn't simple to make a list of the codified systems for shop-window preparation, considering the numberless possibilities that can occur and that have to be, every time, prearranged, relying on the shop-window dresser's cleverness and experience.

Restricting the speech to the large size shop-window, we can single out, like basic elements, the floor and the back; it's on these two levels that, usually, products on sale are shown, leaving unused, for show purposes, the inside space of the shop-windows. As the beholder's attention is turned only to those two above-mentioned levels, the whole seems dull, expectable in its showing sequence, without showing any unusual view or new hint that stops the attention on a particular product, without interesting, after all, the beholder, already accostumed to preparations based on the same standard and unimportant principle.

Now, in order to exploit the inside room of the window as a show room, dummies are made, on which the clothes are put on or clothes are hanged on more or less invisible threads, hanged on the ceiling, trying to give an airy and natural shape to the hanged articles. The fact is, however, that the threads, except in particular cases, are perfectly visible, and that, as the clothes are hanged in single points, they often have an edgy, falling and incorporeal shape, like a cloth hanging to get dry.

This invention has the exact purpose of preparing shop-windows using also their inside room, arranging the clothes on different vertical levels, and variously angled, without one hiding the others and giving to the clothes the most eccentric and fantastic shapes, according to harmonious and elegant lines, with flimsy drapings and turns-up and, at least, without noticing the points of support.

In this way, the shop-window has a lively shape, without empty room, with the clothes apparently hanging in the air, it's all up to the cleverness and taste of the window-dresser, however, not to create a chaotic mass of clothes (or other things); it's also up to the window-dresser the choice of working with the right lighting and assembling devices to create a certain atmosphere in the window or to underline some particular shown clothes.

We have to underline that, though thought for the preparation of windows in which clothes, fabrics, curtains, yarns are shown, this suction-cap with a clutch flexible pipe, can be practically and rationally used in preparing windows with other kind of products or shows and inside the shops, stands, art galleries, house furnishings, etc.

It isn't excluded, however, a possible use in the furnishing field, to realize new hangers, in tune with new furnishing principles, that want to be different from traditional models and rules. More exactly: this suction-cup with a clutch flexible pipe is formed, in its essentiality, by a common, highly adhesive suction-cup, on the outer side of which, two parallel or not parallel, rectangular (or square) or not rectangular section guides find place.

A flexible plastically shapable pipe - made, for example, of a plastic pipe, of a certain diameter, finished to the extremities and having inserted, along its length, a central part formed by a little bar metallic, or of other materials (zinc plated iron, lead, etc.) - which can assume and mantain, also, under load and for an indefinite time, any shape of bend line, is inserted (also folded on itself, making a U letter), inside one, or both, of the above-mentioned guides.

It's well agreed that, of course, the expected loads are of limited entity, like a common, even if heavy, cloth (coats, furs etc.). These suction-cups with a clutch flexible pipes have to be applied, in the right way, on smooth or not smooth surfaces of panels (suitably sized and shaped), preferably (but not necessarily) transparent or not, previously set up in the shop-window or in the stand, according to a plan decided by the window-dresser.

After having applied the suction-cups, the cloth to be shown is hanged on them or, better, on the flexible pipe they are provided with, minding that the cloth covers either the suction-cups or their flexible pipes; it's all of the window dresser to model the flexible pipes by appropriately bending them, to make them take the right positions.

As the above-mentioned flexible pipe is free at its ends, it's possible to realize a wide range of variations of its positions and also it's possible to thread in it parts of clothes, such as sleeves of jackets, coats, raincoats, shirts, etc., making them statically modelled in the most functional positions, from an aesthetical point of view, hiding to the beholder's sight either the real suction-cup or the flexible pipe.

The same situation of a plastically modelled show is efficacious, of course, for trousers, skirts, cloaks, drapings and so on. The panels, on the surfaces of which the suction-cups are applied, are a not secondary element for a good final result; their mutual disposition, their sizes, shapes and materials by which they are made, have to be in tune with the final result the window-dresser wants to obtain.

It's provided the possibility of ranging form transparent materials (such and/or decorated, metallic, etc. or translucent).

This invention will be better understood and defined looking at the description and at the enclosed drawings, which show a practical realization of the invention, made by any material, form, size and colour.

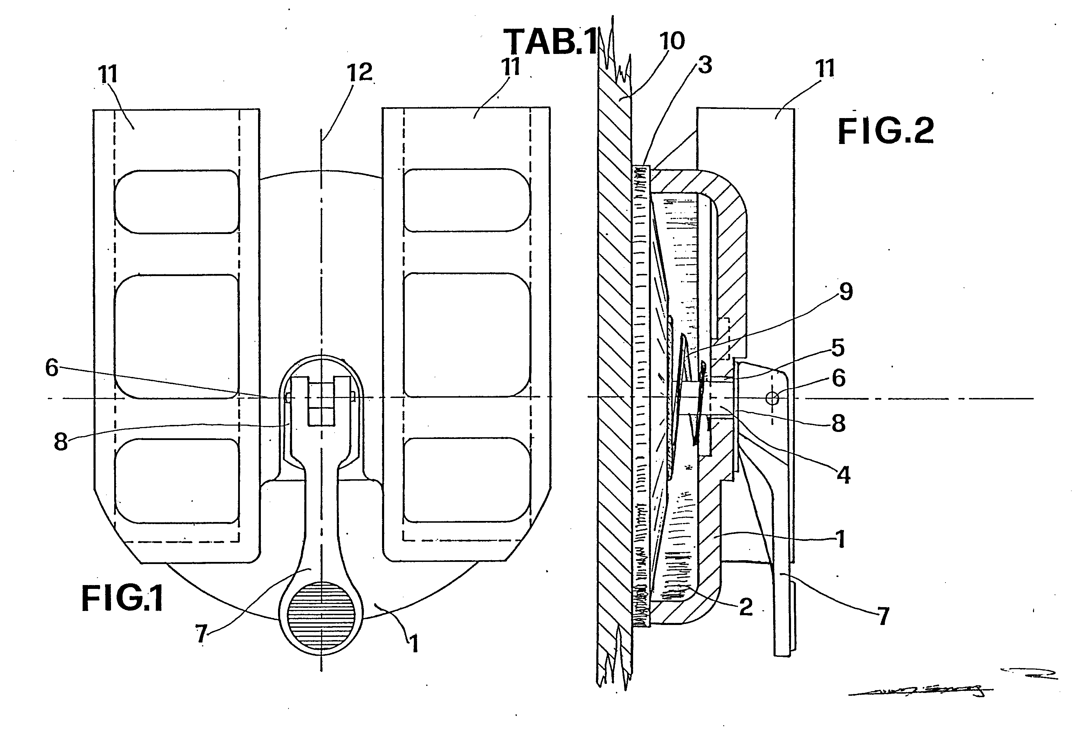

In table 1: Figure 1 shows, in orthogonal projection, the suction-cup, from the side of the two supporting guides of the flexible pipe; Fig. 2 shows, in section, the side sight of the suction-cup.

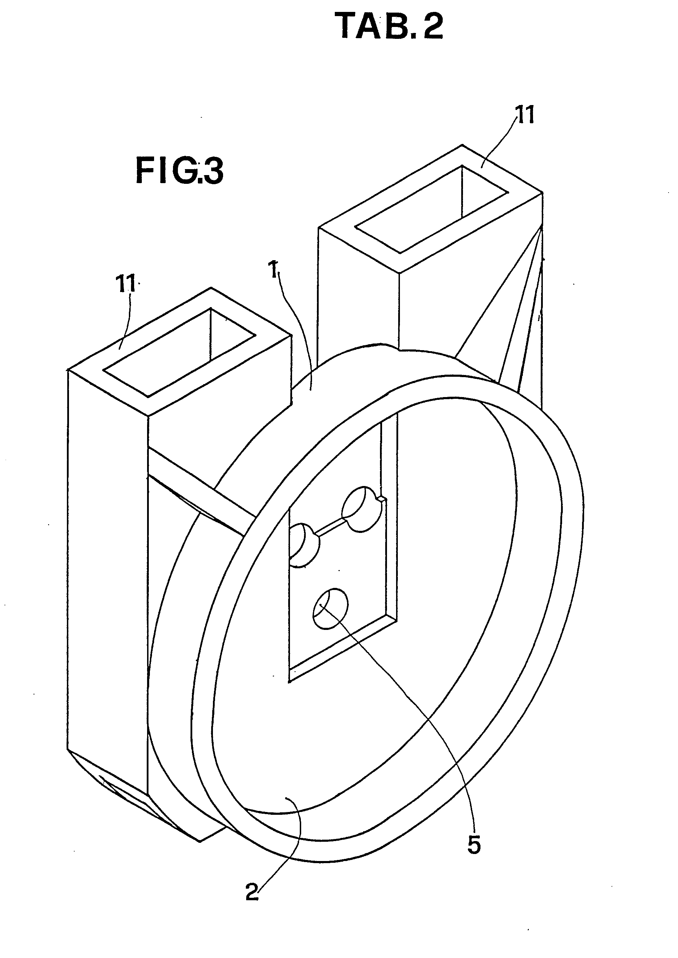

In table 2: Fig. 3 shows, in isometric drawing, the part of the suction-cup with a clutch flexible pipe having the two guides.

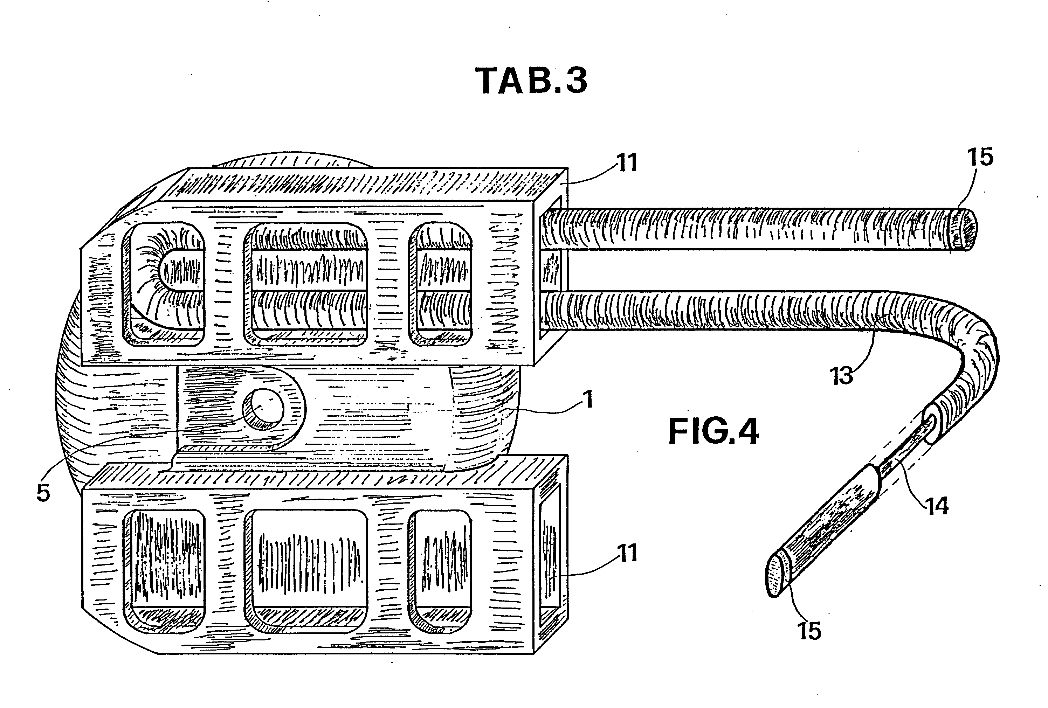

In table 3: Fig. 4 shows as the flexible pipe has to be inserted in the proper guide.

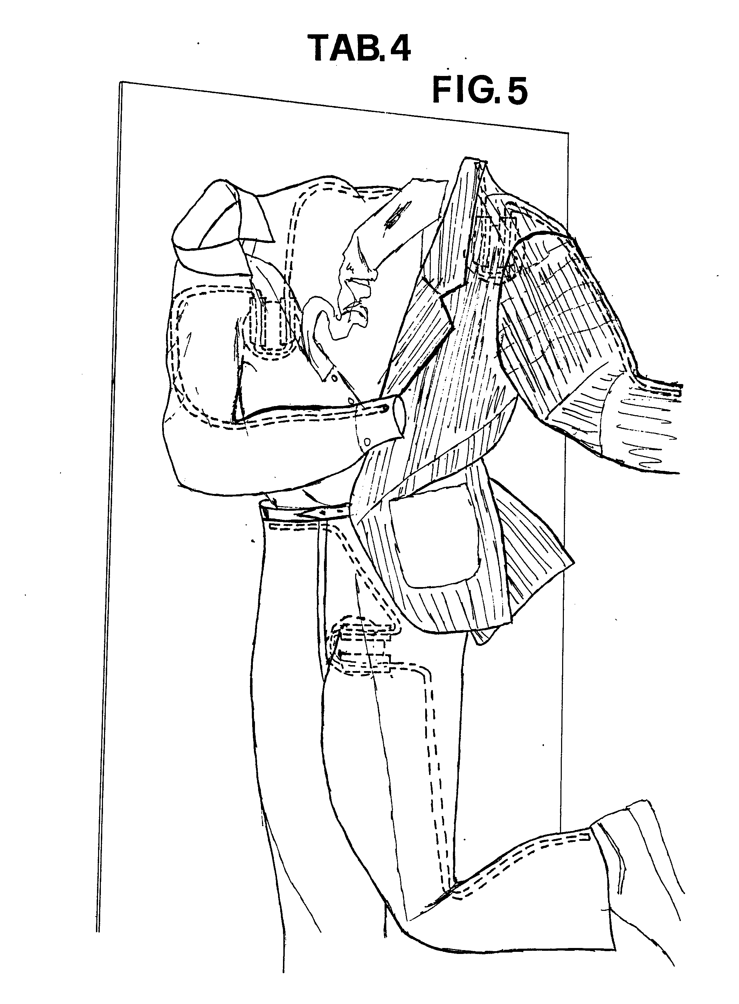

In table 4: Fig. 5 riproduces, for a better evidence, the inside of a shop-window where the suction-cup with a clutch flexible pipe (completely hidden to the sight) is used, applied to a vertical plate glass that gives support and statical movement to some clothes.

More particularly: the invention is formed by a bearing element 1 of circular form, cup shaped, so as to delimit a room 2, where is placed the membrane 3 of the suction-cup.

This membrane 3 has a rod 4, passing through the hole 5, obtained in the bearing element 1, on which is hinged, on axis 6, the cam-lever 7.

Between the cam-lever 7 and the outer surface of the bearing element 1, is interposed a grommet 8, to avoid the wear of the surface itself during the manual working of the cam-lever 7.

Between membrane 3 and the interval surface of room 2 is placed a compression spring 9.

Placing membrane 3 on a surface of panel 10, and manually turning the cam-lever 7, is automatically produced the adhesion of the whole suction-cup to panel 10.

The adhesion is strong and keeps so for longer periods of time than those which, normally, are held for a show.

On the bearing element 1 there are two guides 11 of parallelepiped form, empty inside, parallel between them and lined with the longitudinal axis 12, of the cam-lever 7.

In these guides are inserted some flexible pipes 13, which can be easily bent manually by the window-dresser, and on which are hanged and/or threaded the clothes and not specified articles shown. Because of the capability of being bend of the flexible pipes 13, the same can be shaped even with the clothes hanged on them, so as to be able to change in any moment, the appearance of the show. These flexible pipes 13 have a metal body 14, that gives enough solidity to the whole, so as to support the weight of the clothes hanged on them.

The ends of both flexible pipes 13 are closed with some bungs 15, to prevent the coming out to the metall body 14.

## Claims

1) Suction-cup with a clutch flexible pipe, fitted to prop up some points of support for clothes on transparent or not transparent panels, and particularly suitable to prepare shop-windows, shows, etc.,

characterized from being provided with two guides in which are inserted some flexible pipes, on which are arranged, suitably folded, the clothes and the not specified objects to show.

2) Suction-cup with a clutch flexible pipe, according to the preceding claim, characterized from the fact that the membrane (3) is moved by a cam-lever (7) which permits an easy and immediate connection-separation from the panel surface (10).

3) Suction-cup with a clutch flexible pipe, according to the preceding claims, characterized from the fact that the two guides (11), for example, of a parallelepiped form, are empty and sufficiently large inside, to permit the easy clutch of the flexible pipes (13) in them.

4) Suction-cup with a clutch flexible pipe, according the preceding claims, characterized from the fact of permitting to prepare, with the panels (1), shop-windows, shows, stands, quickly and with the creation of particularly original, unusual and cheap visual effects.

5) Suction-cup with a clutch flexible pipe, according to the preceding claims, the whole as described and as represented, in object, in the enclosed drawings.

FIG.2

TAB.1

FIG.1

# TAB. 2

## FIG.3

# TAB.3

**FIG.4**

# TAB. 4

# FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 276 779 (ISENBERG)<br>* Page 3; figures 6-9 * | 1,2,4,5 | F 16 B 47/00<br>A 47 F 7/19 |
| A | | 3 | |
| Y | GB-A- 418 858 (LINZ)<br>* Page 3, lines 3-58; figures 1-10 * | 1,4,5 | |
| Y | FR-A-2 135 635 (MEYER)<br>* Page 4; figures 2,3 * | 2 | |
| A | FR-A-1 162 854 (PARAT)<br>* Whole document * | 1 | |
| | | | **TECHNICAL FIELDS SEARCHED (Int. Cl.4)** |
| | | | A 47 F<br>F 16 B<br>A 47 K<br>A 47 G<br>A 47 J |

The present search report has been drawn up for all claims

| Place of search | Date of completion of the search | Examiner |
|---|---|---|
| THE HAGUE | 28-01-1988 | OFFMANN P.A. |

EPO FORM 1503 03.82 (P0401)